# EUROPEAN PATENT SPECIFICATION

(11) **EP 2 094 513 B1**
(45) Date of publication and mention of the grant of the patent: **30.11.2011**
(21) Application number: 06829689.6
(22) Date of filing: 18.12.2006
(51) Int. Cl.: B60C 15/06

(54) **TIRE HAVING AN IMPROVED BEAD STRUCTURE**
REIFEN MIT EINER VERBESSERTEN WULSTSTRUKTUR
PNEU AYANT UNE STRUCTURE DE TALON AMÉLIORÉE

(43) Date of publication of application: 02.09.2009
(73) Proprietor: Pirelli Tyre S.p.A., 20126 Milano (IT)
(72) Inventor: CEREDA, Giuseppe, 20126 Milano (IT); DAGHINI, Guido, 20126 Milano (IT); CALHABEU, MUNIZ, Anderson, Santo André, SP 09110-900 (BR)
(74) Representative: Giannesi, Pier Giovanni
(86) International application number: PCT/EP2006/012165
(87) International publication number: WO 2008/074337

(56) References cited:
- EP-A- 0 375 443
- EP-A1- 0 595 653
- DE-A1- 3 617 880
- US-A- 4 811 773
- US-A- 5 379 819
- US-A- 6 026 878

## Description

The present invention relates to a tire having an improved bead structure.

More in particular, the present invention relates to a tire, preferably to a heavy load vehicle tire, comprising an improved bead structure.

As it is known, a tire usually comprises a pair of bead structures comprising at least one bead core and at least one bead filler; a carcass structure of a substantially toroidal shape, comprising at least one carcass ply usually including a plurality of reinforcing elements, extending between the bead structures, said carcass ply having its end portions turned up around said bead core; a belt structure applied in a radially external position with respect to said carcass structure; a tread band radially superimposed on said belt structure; a pair of sidewalls applied laterally on opposite sides with respect to said carcass structure.

EP 375443 A2 discloses a radial tire for a construction vehicle includes a tread, a pair of sidewalls extending radially inwardly and terminating in inner edges having bead cores embedded therein, a carcass made of a steel cord ply extending between the bead cores, a belt arranged between the carcass and the tread to form with the carcass a main reinforcing layer, and bead reinforcing layers. Each of the bead reinforcing layers includes at least two sets of fiber cords layers.

US 4811773 discloses a heavy duty pneumatic radial tire for use in airplanes and the like, which comprises a toroidal radial carcass, a belt superimposed about a crown region of the carcass, and a bead portion reinforcement comprised of a main chafer made from aromatic polyamide fiber cords, and an auxiliary chafer of at least two outer cord layers and at least two inner cord layers.

EP 595653 A1 discloses a pneumatic tire having an improved carcass structure capable of increasing the sidewall rigidity. The tire comprises a carcass composed of an inner carcass ply and an outer carcass ply, the inner carcass ply having a pair of edges turned up around the bead cores from the axially inside to the outside of the tyre. In each of the sidewalls, at least one steel cord reinforcing layer made of parallel steel cords is positioned adjacent to at least one of the outer carcass ply and the carcass turned up portion.

DE 3617880 discloses a pneumatic radial tyre for use with heavy loads, having an improved, reinforced structure of the bead section with a carcass layer which protrudes upwards around a bead core, a rubber block SE which is arranged between the main section and the section of the carcass layer which protrudes upwards, a steel cord reinforcement layer which is arranged on the outside of the section which protrudes upwards, an inner protective layer which is arranged between the rubber block SE and the section which protrudes upwards and an outer protective layer which is arranged adjacent to the outside of the section which protrudes upwards and the outside of the reinforcement layer. The inner protective layer is composed of organic fiber cords, such as nylon, polyester, polyamide or the like.

US 5379819 discloses a high performance pneumatic tire which comprises a carcass turned up around bead cores from axially inward to outward thereof to form two turned up portions and one main portion therebetween, the carcass turned up portions extending radially outwardly along and adjacently to the carcass main portion from the bead portion to a position not lower than a 1/2 height of the tire section height, an axially inner reinforcing layer disposed axially inside the carcass main portion, and an axially outer reinforcing layer disposed between the carcass main portion and each turned up portion. For the carcass cords, light weight cords are used. For example, organic fiber cords, e.g. nylon, polyester, rayon, aromatic polyamide and the like, or carbon fiber co rds are used. For the reinforcing layers, aromatic polyamide fiber cords are used.

US-A-6 026 878 discloses a tire having the technical features of the preamble of claim 1.

It is known that, both bead structures and sidewalls, are subjected to a large bending deformation during the running of the tire under loading, in particular under the action of a large loading. In particular, because of said bending deformation, the generation of strain or the concentration of stress at the radially outer end of the carcass ply turned up end portions and at neighborhood thereof, may occur. As a result, there is a problem that a crack may occur at the radially outer end of the carcass ply turned up end portions which, because of repetitiveness of said bending deformation, may cause bead structure failure by the growth of such a crack. Consequently, the bead structure durability is lowered.

Attempts to solve the abovementioned drawbacks have been made in the art.

For example, United States Patent US 4,953,605 relates to a radial tire for heavy loads, comprising: a pair of bead cores; a carcass the ends of which are turned up around the bead cores to form a carcass main part and a carcass turned up part on the axially inside and the outside of the bead core, respectively; a metallic cord reinforcing layer turned up around the bead core to form (a) an outside part extending along the axially outside of the carcass turned up part and (b) an inside part extending along the axially inside of the carcass main part; an outside reinforcing layer of organic fiber cords disposed axially outside the outside part of the metallic cord reinforcing layer; an inside reinforcing layer of organic fiber cords disposed on the axially inside of the carcass main part; a bead apex between the carcass main part and the turned up part extending radially outwardly beyond the radially outer end of the outside reinforcing layer; a rubber chafer disposed outside the outside reinforcing layer; and an inner sidewall disposed between the outside reinforcing layer and the rubber chafer extending radially outwardly beyond the radially outer end of the outside reinforcing layer so as to contact with a buffer of the bead apex. The abovementioned tire is said to have an improved reinforced structure for the bead part which allow to improve the bead part durability under severe service conditions.

United States Patent US 5,151,140 relates to a heavy-duty pneumatic radial tire having a bead portion comprising a carcass layer having its respective end portions turned up about a bead core from the axially inner side to the axially outer side of the tire and at least two reinforcing layers disposed along a portion of the carcass layer, said at least two reinforcing layers comprising an inner reinforcing layer of steel cords having a layer tenacity of from 30 kg/mm of layer width to less than 80 kg/mm of layer width, incorporated on the axially inner side of the bead portion, and an outer reinforcing layer of steel cords having a greater layer tenacity than the inner reinforcing layer and of at least 80 kg/mm of layer width, incorporated on the axially outer side of the bead portion, wherein the inner reinforcing layer extends from the axially inner side of the bead portion to the axially outer side of the portion and terminates at an area corresponding to the radially inner end of the outer reinforcing layer, wherein cords in the inner reinforcing layer and cords in the outer reinforcing layer are inclined in a same direction relative to the radial direction of the tire, and wherein when mounted on a vehicle the direction of inclination of the cords in the inner and the outer reinforcing layers is opposite the direction of forward rotation of the tire. The abovementioned tire is said to have an improved durability of the bead portion.

United States Patent US 6,079,467 relates to a heavy duty radial tire comprising a tread portion, a pair of sidewall portions, a carcass ply extending between the bead portions through the tread portion and sidewall portions and turned up around bead cores from the axially inside to the outside of the tire to form a pair of turnup portions and a main portion therebetween, a bead apex disposed between the carcass main portion and each turnup portion of the carcass ply and extending radially outwardly from the bead core, and a chafer disposed in each bead portion to define a rim contacting surface, each turnup portion extending radially outwardly beyond the radially outer end of the bead apex so that the turnup portion has a parallel part which is placed adjacent to and substantially in parallel with the main portion, said chafer extending radially outwardly along the axially outside of the turnup portion beyond the radially outer end of the bead apex. The abovementioned tire is said to have an improved bead durability.

European Patent Application EP 1,502,771 relates to a pneumatic tire comprising at least one carcass ply of steel cords, in which a wrap part wound on a bead core along its outer peripheral face is disposed in a turnup portion of the carcass ply and at least one wire chafer wound around the bead core from a main body portion of the carcass ply toward the turnup portion thereof in a widthwise direction is embedded in the bead portion, and a shortest distance of a start end of the wire chafer located at the side of the main body portion of the carcass ply as measured outward from a normal line drawn to an outer face of the bead portion at a first rim line position in the radial direction of the tire is located to be within a range of 15-25 mm, and a terminal end of the wire chafer located at the side of the turnup portion of the carcass ply is arranged within a range defined between a vertical line drawn from an outermost end position of the bead core in the radial direction to the outer face of the bead portion and said normal line. The abovementioned tire is said to have an excellent bead portion durability.

The Applicant has faced the problem of providing a tire having an improved bead structure. In particular, the Applicant has faced the problem of providing a tire, more in particular a heavy load vehicle tire, wherein the generation of strain or the concentration of stress at the radially outer end of the carcass ply turned up end portions and at neighborhood thereof, are remarkably reduced, so remarkably reducing also the risk of a crack occurrence therein which may cause a bead structure failure.

The Applicant has now found that it is possible to obtain a tire having the above characteristics by placing at least two reinforcing layers axially inside with respect to the carcass ply turned up end portions.

The present invention relates to a tire according to claim 1.

For the aim of the present description and of the claims which follows, any "height" in a tire radial section is determined as the perpendicular distance in the radial direction from the nominal rim diameter to the point concerned.

Said "nominal rim diameter" is determined according to ETRTO Standard.

For the aim of the present description and of the claims which follows, the term "maximum tire section width" refers to the maximum linear axial distance between two points on the outer surface of the sidewalls, said axial distance being parallel to the rotation axis of the tire.

According to one preferred embodiment, the radial distance (d1) between the radially inner ends of said outer reinforcing layer and said inner reinforcing layer, is higher than or equal to 4 mm, preferably of from 5 mm to 8 mm.

For the aim of the present description and of the claims which follows, the term "radial distance" refers to the radial distance between two points, in particular to the difference between the heights of said two points.

According to one preferred embodiment, the radially inner end of said outer reinforcing layer is staggered radially outward with respect to the radially inner end of said inner reinforcing layer.

According to one preferred embodiment, the radial distance (d2) between the radially outer end of said carcass ply turned up end portions and the highest radially inner end of one of said outer reinforcing layer and said inner reinforcing layer, is higher than or equal to 8 mm, preferably of from 10 mm to 15 mm.

According to one preferred embodiment, when the radially outer end of said at least one chafer is placed at a higher height with respect to the radially outer end of said carcass ply turned up end portions, the radial distance (d3) between the lowest radially outer end of one of said outer reinforcing layer and said inner reinforcing layer and the radially outer end of said at least one chafer, is higher than or equal to 4 mm, preferably of from 5 mm to 8 mm.

According to one preferred embodiment, when the radially outer end of said at least one chafer is placed at a lower height with respect to the radially outer end of said carcass ply turned up end portions, the radial distance (d6) between the lowest radially outer end of one of said outer reinforcing layer and said inner reinforcing layer and the radially outer end of said carcass ply turned up end portions, is higher than or equal to 4 mm, preferably of from 5 mm to 8 mm.

According to one preferred embodiment, the radial distance (d4) between the radially outer ends of said outer reinforcing layer and said inner reinforcing layer, is higher than or equal to 4 mm, preferably of from 5 mm to 8 mm.

According to one preferred embodiment, the radially outer end of said inner reinforcing layer is staggered radially outward with respect to the radially outer end of said outer reinforcing layer.

According to one preferred embodiment, the radial distance (d5) between the highest radially outer end of one of said outer reinforcing layer and said inner reinforcing layer and the radially outer end of said at least one chafer, is lower than or equal to 35%, preferably of from 15% to 30%, with respect to a tire height (h2) in correspondence to the maximum tire section width (W).

According to one preferred embodiment, the highest radially outer end of one of said outer reinforcing layer and said inner reinforcing layer, is placed at a tire height (h3) which is lower than or equal to 60%, preferably of from 30% to 50%, more preferably of from 35% to 45%, with respect to a tire height (h2) in correspondence to the maximum tire section width (W).

According to one preferred embodiment, the reinforcing elements of said outer reinforcing layer and said inner reinforcing layer are metal cords, preferably steel cords.

According to a further preferred embodiment, said metal cords comprise at least one elementary metal wire. Preferably, said metal cords comprise at least one preformed elementary metal wire, while the remaining elementary metal wires forming said metal cords are of the non-preformed type. More preferably, the elementary metal wires forming said metal cords are all preformed.

Preferably, said elementary metal wire has a diameter in the range of from 0.05 mm to 0.25 mm, more preferably of from 0.10 mm to 0.20 mm.

Preferably, the preformed elementary metal wire is preformed in a plane.

Preferably, said elementary metal wire is preformed so that it assumes a wave-shaped configuration so that it is substantially devoid of sharp edges and/or discontinuities in curvature along their longitudinal extension. Said feature is particularly advantageous since the absence of said sharp edges results in a favourable increasing of the breaking load of the elementary metal wire.

Particularly preferred is a preforming according to substantially sinusoidal undulations. Preferably, said sinusoidal undulations have a wavelength of from 2.5 mm to 30 mm, and more preferably of from 5 mm to 25 mm. Preferably, said sinusoidal undulations have a wave amplitude of from 0.12 mm to 1 mm. The wavelength and wave amplitude ranges referred to above may be measured directly on the non-rubberized elementary metal wire before it is inserted into the tire or on the finished (vulcanized) tire. Advantageously, the measurement of said parameters may be performed on the elementary metal wire by using a magnifying lens and a graduated scale (for example, a graduated ruler). In the case where a finished (or vulcanized) tire is to be analysed, it is necessary to extract the reinforcing layer from the tire and to remove the rubberizing compound therefrom by using suitable solvents, for example by treating it with dichlorobenzene at 100°C for at least 12 hours.

In an alternative embodiment, the elementary metal wire is not preformed in a plane but, for example, is helically preformed.

In order to obtain said preformed elementary metal wire, it is possible to use any one of the methods known in the sector. For example, it is possible to use toothed-wheel devices of the type illustrated in United States Patent US 5,581,990, or to use the device described in International Patent Application WO 00/39385.

According to one preferred embodiment, said elementary metal wire is made of steel.

According to one preferred embodiment, the reinforcing elements of said outer reinforcing layer are inclined with a radial inclination angle of from +10° to +35°, preferably of from +15° to +25°.

According to one preferred embodiment, the reinforcing elements of said inner reinforcing layer are inclined with a radial inclination angle of from -10° to -35°, preferably of from -15° to -25°.

With "radial inclination angle" of each reinforcing element it is meant the smallest angle between a lying plane of the reinforcing element perpendicular to the tire equatorial plane and a radial plane of the tire passing in correspondence of the radially inner extremity of the same reinforcing element. This angle conventionally has a positive value when the smallest angle is obtained by rotating the radial plane in the clockwise direction to overlap with the lying plane of the reinforcing element, while it has a negative value when the above rotation is in the counterclockwise direction.

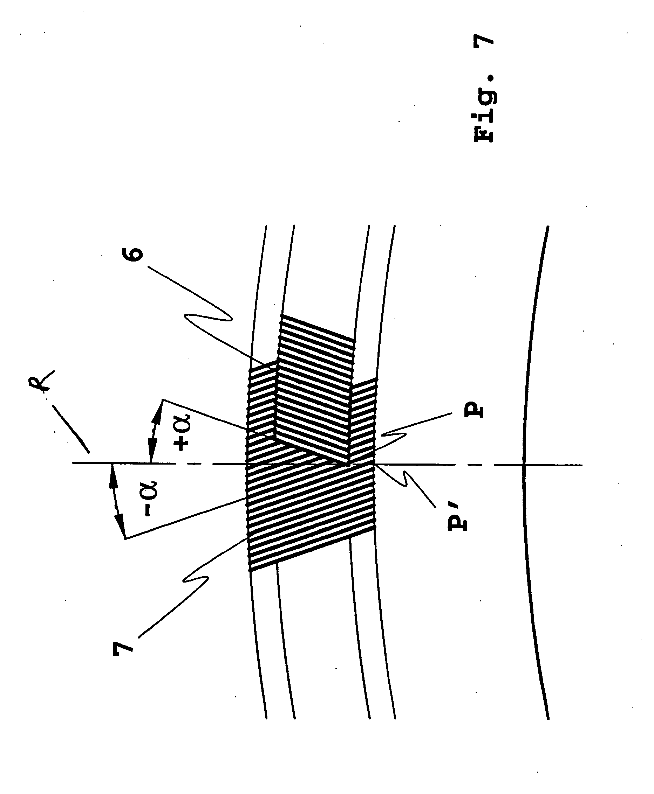

A radial inclination angle is depicted in Fig. 7, where it is schematically shown a side view of a portion of the outer reinforcing layer (6) and the inner reinforcing layer (7) placed on the tire in an axial internal position with respect to a carcass ply turned up end portion (not shown in Fig. 7). The radial inclination angle is indicated by +α and in this case it has a positive value and -α and in this case has a negative value, while with P it is indicated the radially inner extremity of the reinforcing element of the outer reinforcing layer (6), with P' it is indicated the radially inner extremity of the reinforcing element of the inner reinforcing layer (7), and with R the tire radial plane passing through points P and P'.

For the aim of the present description and of the claims which follow, except in the operating examples, or where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Additional features and advantages of the invention will be better apparent from the following description of some preferred embodiments of a tire according to the present invention, which description is made, by way of non-limiting example, with reference to the attached Fig. 1-6 wherein:
- Fig. 1 is a view in cross-section of a portion of a tire according to the present invention;
- Fig. 2 is an enlarged view in cross-section of a bead structure of the tire of Fig. 1;
- Fig. 3-6 are enlarged views in cross-section of bead structures according to further embodiments according to the present invention.

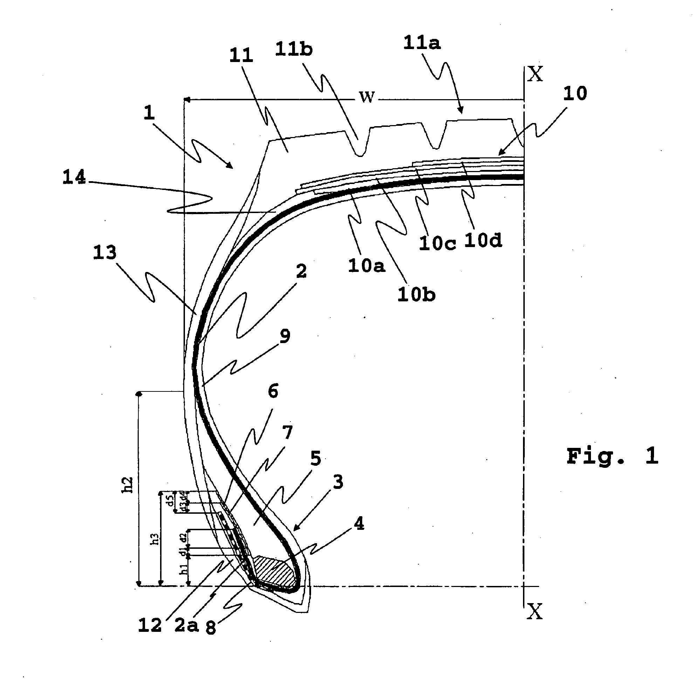

For simplicity, Fig. 1 shows only a portion of the tire, the remaining portion not represented being identical and simmetrically arranged with respect to the equatorial plane (x-x) of the tire. The tire (1) comprises at least one carcass ply (2), the opposite lateral edges of which are associated with respective bead structures (3) comprising at least one bead core (4) and at least one bead filler (5). The association between the carcass ply (2) and the bead core (4) is achieved here by folding back the opposite lateral edges of the carcass ply (2) around the bead core (4) so as to form the carcass ply turned up end portion (2a) as represented in Fig. 1.

The carcass ply (2) generally consists of a plurality of reinforcing elements arranged parallel to each other and at least partially coated with a layer of a crosslinked elastomeric material. These reinforcing elements are made of steel wires stranded together, coated with a metal alloy (for example copper/zinc, zinc/manganese, zinc/molybdenum/cobalt alloys and the like)

The carcass ply (2) is of radial type, i.e. it incorporates reinforcing elements arranged in a substantially perpendicular direction relative to a circumferential direction. The bead core (4) is enclosed in a bead structure (3), defined along an inner circumferential edge of the tire (1), with which the tire engages on a rim (not represented in Fig. 1) forming part of a vehicle wheel. The space defined by each carcass ply turned up end portion (2a) contains a bead filler (5) usually made of a crosslinked elastomeric material, wherein the bead core (4) is embedded.

An outer reinforcing layer (6) provided with reinforcing elements parallel to one another and inclined with respect to the radial direction of the tire (1), is placed axially inside with respect to said carcass ply turned up end portion (2a).

An inner reinforcing layer (7) provided with reinforcing elements parallel to one another and inclined with respect to the radial direction of the tire (1) in a direction opposite to those of said outer reinforcing layer (6), is placed axially inside with respect to said outer reinforcing layer (6).

As mentioned above, the reinforcing elements of said outer reinforcing layer and said inner reinforcing layer, are metal cords, preferably steel cords, comprising at least one elementary metal wire. Said elementary metal wire is preferably made of steel. In the case where the diameter of the elementary metal wire is of from 0.1 mm to 0.4 mm, the breaking strength of a standard NT (normal tensile) steel ranges from 2600 N/mm² (or 2600 MPa - MegaPascal) to 3200 N/mm², the breaking strength of a HT (High Tensile) steel ranges from 3000 N/mm² to 3600 N/mm², the breaking strength of a SHT (Super High Tensile) steel ranges from 3300 N/mm² to 3900 N/mm², the breaking strength of a UHT (Ultra High Tensile) steel ranges from 3600 N/mm² to 4200 N/mm². Said breaking strength values depend in particular on the quantity of carbon contained in the steel.

Generally, said elementary metal wire is provided with a brass coating (Cu of from 60% to 75% by weight, Zn of from 40% to 25% by weight), having a thickness of from 0.10 µm to 0.50 µm. Said coating ensures better adhesion of the elementary metal wire to the elastomeric material and provides for protection against corrosion of the metal, both during production of the tire and during use thereof. Should it be necessary to ensure a greater degree of protection against corrosion, said elementary metal wire may be advantageously provided with an anti-corrosive coating other than brass, able to ensure a greater corrosion resistance, such as, for example, a coating based on zinc, zinc/manganese (ZnMn) alloys, zinc/cobalt (ZnCo) alloys or zinc/cobalt/manganese (ZnCoMn) alloys.

Preferably, the reinforcing elements of said outer (6) and inner (7) reinforcing layers are obtained by using cords having a structure of the type n x D, where n is the number of elementary metal wires forming the cord and D is the diameter of each elementary metal wire. Preferably n ranges from 2 to 6.

Preferably, the stranding pitch of said cords ranges from 2.5 mm to 25 mm, more preferably from 6 mm to 18 mm.

Preferred cord constructions are, for example: 2x (i.e. two elementary metal wires twisted together), 3x, 4x, 5x, 2+1 (i.e. one strand of two elementary metal wires and one strand of one elementary metal wire, said two strands being twisted together), 2+2, 1+4, 1+5.

Preferably, the density of the reinforcing elements in said outer (6) and inner (7) reinforcing layers is of from 40 cords/dm to 160 cords/dm, more preferably of from 80 cords/dm to 120 cords/dm.

Preferably, the thickness of said outer (6) and inner (7) reinforcing layers, i.e. the total thickness including the diameter of the cord and the elastomeric material into which the cord are embedded, is of from 0.6 mm to 1.5 mm, preferably from 0.8 mm to 1.2 mm.

A chafer (8) is placed axially outside with respect to said carcass ply turned up end portion (2a).

The chafer (8) comprises a plurality of reinforcing elements which are embedded in a crosslinked elastomeric material and which are generally made of textile materials (e.g., aramide, ryon) or metal materials (e.g., steel cord).

The chafer (8) may be located in a plurality of positions inside of the tire bead and/or sidewall. According to the embodiment shown in Fig. 1, the chafer (8) is located in a position axially outside with respect to said carcass ply turned up end portion (2a).

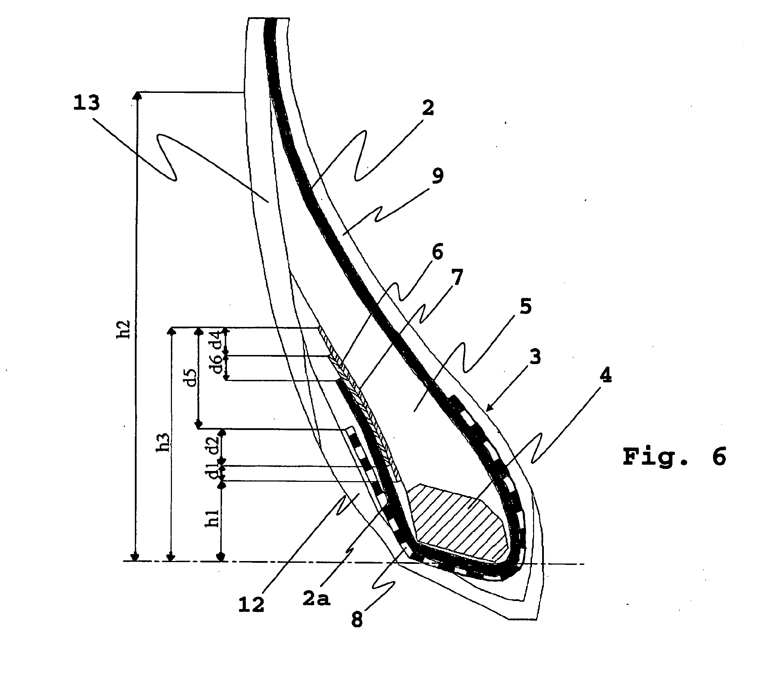

Alternatively the chafer (8) is located in a position axially outside with respect to said carcass ply turned up end portion (2a) and is wound around the bead core (4) and the bead filler (5) so as to at least partially envelope them (as shown in Fig. 6).

In the particular embodiment of Fig. 1, said outer reinforcing layer (6) has its radially inner end staggered radially outward with respect to the corresponding radially inner end of said inner reinforcing layer (7).

In the particular embodiment of Fig. 1, the radially inner end of said inner reinforcing layer (7) is placed at a tire height (h1) which is lower than or equal to 35%, preferably of from 10% to 30%, more preferably of from 15% to 25%, with respect to a tire height (h2) in correspondence to the maximum tire section width (W).

In the particular embodiment of Fig. 1, the radial distance (d1) between the radially inner end of said outer reinforcing layer (6) and the radially inner end of said inner reinforcing layer (7), is higher than or equal to 4 mm, preferably of from 5 mm to 8 mm.

In the particular embodiment of Fig. 1, the radial distance (d2) between the radially outer end of said carcass ply turned up end portion (2a) and the radially inner end of said outer reinforcing layer (6), is higher than or equal to 8 mm, preferably of from 10 mm to 14 mm.

In the particular embodiment of Fig. 1, the radial distance (d3) between the radially outer end of said outer reinforcing layer (6) and the radially outer end of said chafer (8), is higher than or equal to 4 mm, preferably of from 5 mm to 8 mm.

In the particular embodiment of Fig. 1, the radial distance (d4) between the radially outer end of said inner reinforcing layer (7) and the radially outer end of said outer reinforcing layer (6), is higher than or equal to 4 mm, preferably of from 5 mm to 8 mm.

In the particular embodiment of Fig. 1, the radially outer end of said inner reinforcing layer (7) is staggered radially outward with respect to the radially outer end of said outer reinforcing layer (6).

In the particular embodiment of Fig. 1, the radial distance (d5) between the radially outer end of said inner reinforcing layer (7) and the radially outer end of said chafer (8), is lower than or equal to 35%, preferably of from 15% to 30%, with respect to a tire height (h2) in correspondence to the maximum tire section width (W).

In the particular embodiment of Fig. 1, the radially outer end of said inner reinforcing layer (7) is placed at a tire height (h3) which is lower than or equal to 60%, preferably of from 30% to 50%, more preferably of from 35% to 45%, with respect to a tire height (h2) in correspondence to the maximum tire section width (W).

An antiabrasive strip (12) is usually placed in an axially external position relative to the carcass ply turned up end portion (2a).

A belt structure (10) is applied along the circumference of the carcass ply (2). In the particular embodiment of Fig. 1, the belt structure (10) comprises four belt layers (10a) (10b), (10c) and (10d), which are radially superimposed and which incorporate a plurality of reinforcing elements, typically metal cords, said reinforcing elements being parallel to each other in each layer and intersecting with respect to the adjacent layer, inclined preferably in a symmetrical manner with respect to the equatorial plane (x-x) of the tire at an angle of from 10° to 70°, preferably of from 12° to 40°, and coated and welded together by means of a crosslinked elastomeric material. Preferably, said reinforcing elements have a density of from 30 cords/dm to 80 cords/dm, preferably of from 40 cords/dm to 65 cords/dm, measured on said four belt layers (10a), (10b), (10c) and (10d), in a circumferential direction, close to the equatorial plane (x-x) of the tire (1).

Alternatively, the belt structure (10) may comprise a lateral reinforcing layer (not shown in Fig. 1), commonly known as "zero-degree reinforcing layer", radially superimposed on the carcass ply (2). Said lateral reinforcing layer generally incorporates a plurality of reinforcing elements, typically metal cords with a breakage elongation value of from 3% to 10%, preferably of from 3.5% to 7%, said reinforcing elements being oriented in a substantially circumferential direction, thus forming an angle of a few degrees (i.e. 0°) with respect to the equatorial plane (x-x) of the tire, and coated and welded together by means of a crosslinked elastomeric material. Preferably, said reinforcing elements have a density of from 30 cords/dm to 80 cords/dm, preferably of from 40 cords/dm to 60 cords/dm, measured on said lateral reinforcing layer, in a circumferential direction, close to the equatorial plane (x-x) of the tire.

In the particular embodiment of Fig. 1, an insert (14) comprising a crosslinked elastomeric material is located at the buttress area, i.e. the area where the lateral edges of the tread band (11) is connected to the sidewall (13). Usually, the insert (14) is interposed between the carcass ply (2), the belt structure (10) and the sidewall (13).

A sidewall (13) is applied externally onto the carcass ply (2), this sidewall extending, in an axially external position, from the bead structure (3) to the end of the belt structure (10).

A tread band (11), whose lateral edges are connected to the sidewall (13), is applied circumferentially in a position radially external to the belt structure (10). Externally, the tread band (11) has a rolling surface (11a) designed to come into contact with the ground. Circumferential grooves (11b) which are connected by transverse notches (not represented in Fig. 1) so as to define a tread pattern which comprises a plurality of blocks of various shapes and sizes distributed over the rolling surface (11a) are generally made in this surface (11a).

In the case of tubeless tires, a rubber layer (9) generally known as a liner, which provides the necessary impermeability to the inflation air of the tire, may also be provided in an inner position relative to the carcass ply (2).

In Fig. 1, the section width (W) which refers to the maximum linear axial distance between two points on the outer surface of the sidewalls 13, said axial distance being parallel to the rotation axis of the tire (1), is also represented.

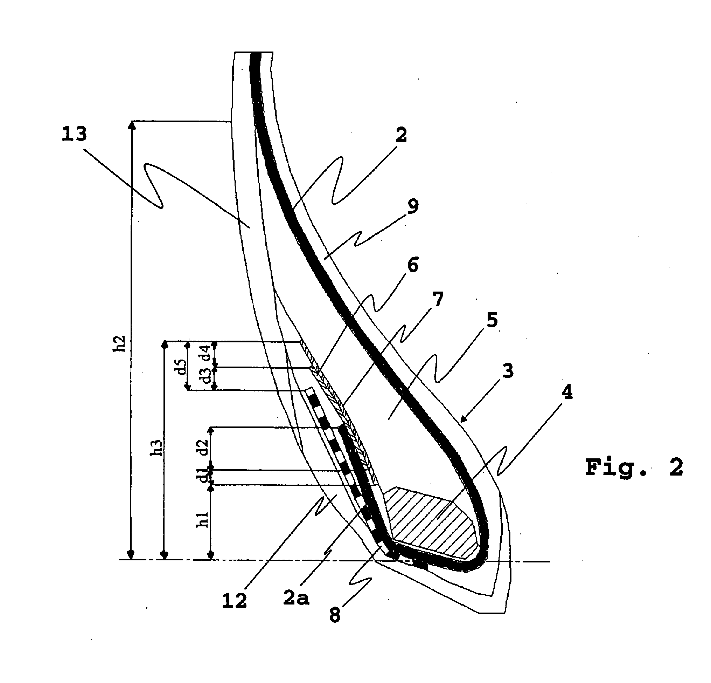

Fig. 2 shows an enlarged view in cross-section of a bead structure according to Fig. 1. For simplicity of description, the reference signs here reported have the same meanings as disclosed in the above Fig. 1.

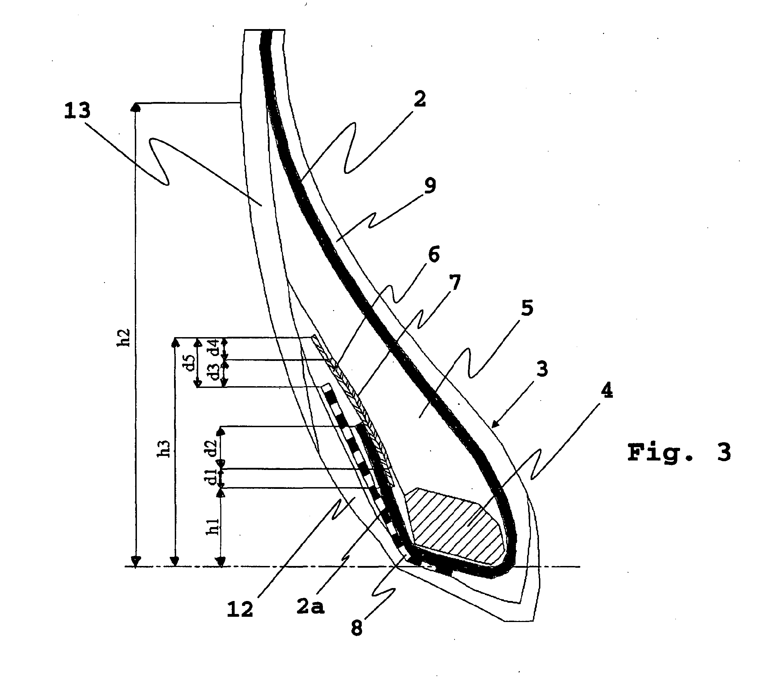

Fig. 3 shows an enlarged view in cross-section of a further bead structure according to the present invention. For simplicity of description, the reference signs here reported have the same meanings as disclosed in the above Fig. 1.

In the particular embodiment of Fig. 3, said outer reinforcing layer (6) has its radially inner end staggered radially inward with respect to the corresponding radially inner end of said inner reinforcing layer (7).

In the particular embodiment of Fig. 3, the radially inner end of said outer reinforcing layer (6), is placed at a tire height (h1) which is lower than or equal to 35%, preferably of from 10% to 30%, more preferably of from 15% to 25%, with respect to a tire height (h2) in correspondence to the maximum tire section width (W).

In the particular embodiment of Fig. 3, the radial distance (d1) between the radially inner end of said inner reinforcing layer (7) and the radially inner end of said outer reinforcing layer (6), is higher than or equal to 4 mm, preferably of from 5 mm to 8 mm.

In the particular embodiment of Fig. 3, the radial distance (d2) between the radially outer end of said carcass ply turned up end portion (2a) and the radially inner end of said inner reinforcing layer (7), is higher than or equal to 8 mm, preferably of from 10 mm to 14 mm.

In the particular embodiment of Fig. 3, the radial distance (d3) between the radially outer end of said inner reinforcing layer (7) and the radially outer end of said chafer (8), is higher than or equal to 4 mm, preferably of from 5 mm to 8 mm.

In the particular embodiment of Fig. 3, the radial distance (d4) between the radially outer end of said outer reinforcing layer (6) and the radially outer end of said inner reinforcing layer (7), is higher than or equal to 4 mm, preferably of from 5 mm to 8 mm.

In the particular embodiment of Fig. 3, the radially outer end of said outer reinforcing layer (6) is staggered radially outward with respect to the radially outer end of said inner reinforcing layer (7).

In the particular embodiment of Fig. 3, the radial distance (d5) between the radially outer end of said outer reinforcing layer (6) and the radially outer end of said chafer (8), is lower than or equal to 35%, preferably of from 15% to 30%, with respect to a tire height (h2) in correspondence to the maximum tire section width (W).

In the particular embodiment of Fig. 3, the radially outer end of said outer reinforcing layer (6) is placed at a tire height (h3) which is lower than or equal to 60%, preferably of from 30% to 50%, more preferably of from 35% to 45%, with respect to a tire height (h2) in correspondence to the maximum tire section width (W).

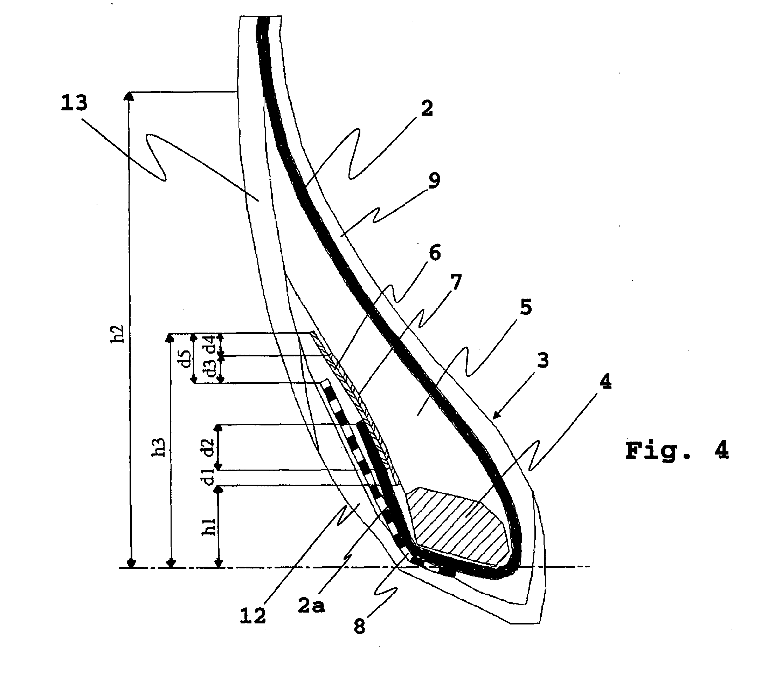

Fig. 4 shows an enlarged view in cross-section of a further bead structure according to the present invention. For simplicity of description, the reference signs here reported have the same meanings as disclosed in the above Fig. 1.

In the particular embodiment of Fig. 4, said outer reinforcing layer (6) has its radially inner end staggered radially outward with respect to the corresponding radially inner end of said inner reinforcing layer (7).

In the particular embodiment of Fig. 4, the radially inner end of said inner reinforcing layer (7) is placed at a tire height (h1) which is lower than or equal to 35%, preferably of from 10% to 30%, more preferably of from 15% to 25%, with respect to a tire height (h2) in correspondence to the maximum tire section width (W).

In the particular embodiment of Fig. 4, the radial distance (d1) between the radially inner end of said outer reinforcing layer (6) and the radially inner end of said inner reinforcing layer (7), is higher than or equal to 4 mm, preferably of from 5 mm to 8 mm.

In the particular embodiment of Fig. 4, the radial distance (d2) between the radially outer end of said carcass ply turned up end portion (2a) and the radially inner end of said outer reinforcing layer (6), is higher than or equal to 8 mm, preferably of from 10 mm to 14 mm.

In the particular embodiment of Fig. 4, the radial distance (d3) between the radially outer end of said inner reinforcing layer (7) and the radially outer end of said chafer (8), is higher than or equal to 4 mm, preferably of from 5 mm to 8 mm.

In the particular embodiment of Fig. 4, the radial distance (d4) between the radially outer end of said outer reinforcing layer (6) and the radially outer end of said inner reinforcing layer (7), is higher than or equal to 4 mm, preferably of from 5 mm to 8 mm.

In the particular embodiment of Fig. 4, the radially outer end of said outer reinforcing layer (6) is staggered radially outward with respect to the radially outer end of said inner reinforcing layer (7).

In the particular embodiment of Fig. 4, the radial distance (d5) between the radially outer end of said outer reinforcing layer (6) and the radially outer end of said chafer (8), is lower than or equal to 35%, preferably of from 15% to 30%, with respect to a tire height (h2) in correspondence to the maximum tire section width (W).

In the particular embodiment of Fig. 4, the radially outer end of said outer reinforcing layer (6) is placed at a tire height (h3) which is lower than or equal to 60%, preferably of from 30% to 50%, more preferably of from 35% to 45%, with respect to a tire height (h2) in correspondence to the maximum tire section width (W).

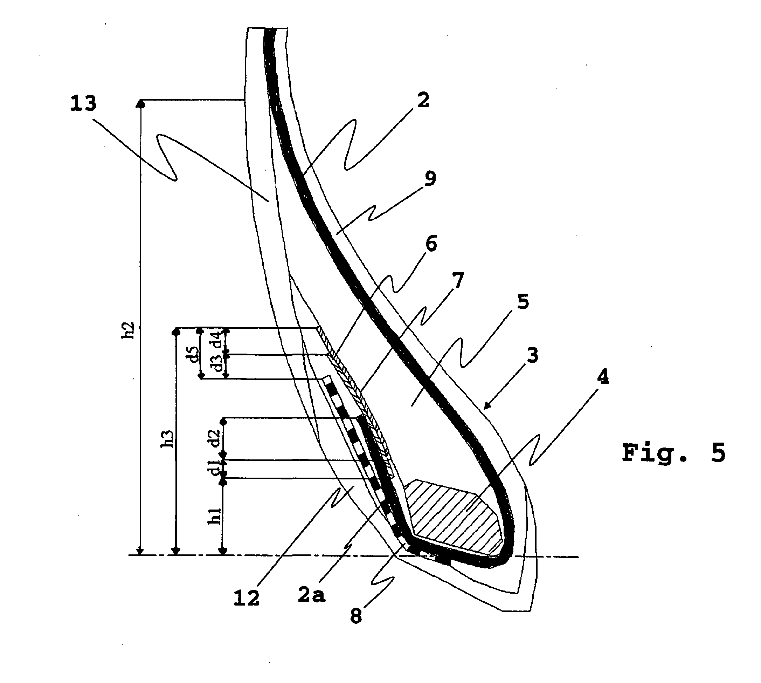

Fig. 5 shows an enlarged view in cross-section of a further bead structure according to the present invention. For simplicity of description, the reference signs here reported have the same meanings as disclosed in the above Fig. 1.

In the particular embodiment of Fig. 5, said outer reinforcing layer (6) has its radially inner end staggered radially inward with respect to the corresponding radially inner end of said inner reinforcing layer (7).

In the particular embodiment of Fig. 5, the radially inner end of said outer reinforcing layer (6) is placed at a tire height (h1) which is lower than or equal to 35%, preferably of from 10% to 30%, more preferably of from 15% to 25%, with respect to a tire height (h2) in correspondence to the maximum tire section width (W).

In the particular embodiment of Fig. 5, the radial distance (d1) between the radially inner end of said inner reinforcing layer (6) and the radially inner end of said outer reinforcing layer (7), is higher than or equal to 4 mm, preferably of from 5 mm to 8 mm.

In the particular embodiment of Fig. 5, the radial distance (d2) between the radially outer end of said carcass ply turned up end portion (2a) and the radially inner end of said inner reinforcing layer (7), is higher than or equal to 8 mm, preferably of from 10 mm to 14 mm.

In the particular embodiment of Fig. 5, the radial distance (d3) between the radially outer end of said outer reinforcing layer (6) and the radially outer end of said chafer (8), is higher than or equal to 4 mm, preferably of from 5 mm to 8 mm.

In the particular embodiment of Fig. 5, the radial distance (d4) between the radially outer end of said inner reinforcing layer (7) and the radially outer end of said outer reinforcing layer (6), is higher than or equal to 4 mm, preferably of from 5 mm to 8 mm.

In the particular embodiment of Fig. 5, the radially outer end of said outer reinforcing layer (6) is staggered radially inward with respect to the radially outer end of said inner reinforcing layer (7).

In the particular embodiment of Fig. 5, the radial distance (d5) between the radially outer end of said inner reinforcing layer (7) and the radially outer end of said chafer (8), is lower than or equal to 35%, preferably of from 15% to 30%, with respect to a tire height (h2) in correspondence to the maximum tire section width (W).

In the particular embodiment of Fig. 5, the radially outer end of said inner reinforcing layer (7) is placed at a tire height (h3) which is lower than or equal to 60%, preferably of from 30% to 50%, more preferably of from 35% to 45%, with respect to a tire height (h2) in correspondence to the maximum tire section width (W).

Fig. 6 shows an enlarged view in cross-section of a further bead structure according to the present invention. For simplicity of description, the reference signs here reported have the same meanings as disclosed in the above Fig. 1.

In the particualr embodiment of Fig. 6, a chafer (8) is located in a position axially outside with respect to said carcass ply turned up end portion (2a) and is wound around the bead core (4) and the bead filler (5) so as to at least partially envolope them.

In the particular embodiment of Fig. 6, said outer reinforcing layer (6) has its radially inner end staggered radially outward with respect to the corresponding radially inner end of said inner reinforcing layer (7).

In the particular embodiment of Fig. 6, the radially inner end of said inner reinforcing layer (7) is placed at a tire height (h1) which is lower than or equal to 35%, preferably of from 10% to 30%, more preferably of from 15% to 25%, with respect to a tire height (h2) in correspondence to the maximum tire section width (W).

In the particular embodiment of Fig. 6, the radial distance (d1) between the radially inner end of said outer reinforcing layer (6) and the radially inner end of said inner reinforcing layer (7), is higher than or equal to 4 mm, preferably of from 5 mm to 8 mm.

In the particular embodiment of Fig. 6, the radial distance (d2) between the radially outer end of said chafer (8) and the radially inner end of said outer reinforcing layer (6), is higher than or equal to 8 mm, preferably of from 10 mm to 14 mm.

In the particular embodiment of Fig. 6, the radial distance (d4) between the radially outer end of said inner reinforcing layer (7) and the radially outer end of said outer reinforcing layer (6), is higher than or equal to 4 mm, preferably of from 5 mm to 8 mm.

In the particular embodiment of Fig. 6, the radially outer end of said outer reinforcing layer (6) is staggered radially inward with respect to the radially outer end of said inner reinforcing layer (7).

In the particular embodiment of Fig. 6, the radial distance (d5) between the radially outer end of said inner reinforcing layer (7) and the radially outer end of said chafer (8), is lower than or equal to 35%, preferably of from 15% to 30%, with respect to a tire height (h2) in correspondence to the maximum tire section width (W).

In the particular embodiment of Fig. 6, the radial distance (d6) between the radially outer end of said outer reinforcing layer (6) and the radially outer end of said carcass ply turned up end portion (2a), is higher than or equal to 4 mm, preferably of from 5 mm to 8 mm.

In the particular embodiment of Fig. 6, the radially outer end of said inner reinforcing layer (7), is placed at a tire height (h3) which is lower than or equal to 60%, preferably of from 30% to 50%, more preferably of from 35% to 45%, with respect to a tire height (h2) in correspondence to the maximum tire section width (W).

## Claims

1. Heavy load vehicle tire (1) comprising:
- a pair of bead structures (3), said bead structures comprising at least one bead core (4) and at least one bead filler (5);
- a carcass structure having a substantially toroidal shape comprising at least one carcass ply (2) extending between said bead cores (4), the end portions of said carcass ply being turned up around said bead cores from the axially inner side to the axially outer side of said tire, said at least one carcass ply incorporating reinforcing elements arranged in a substantially perpendicular direction relative to a circumferential direction, the reinforcing elements being made of steel wires stranded together, coated with a metal alloy;
- a belt structure (10) applied in a radially external position with respect to said carcass structure;
- a tread band (11) radially superimposed on said belt structure;
- a pair of sidewalls (13), each sidewall being applied laterally on opposite sides with respect to said carcass structure;
- at least one chafer (8) placed axially outside with respect to said carcass ply turned up end portions (2a);
- at least two reinforcing layers (6, 7) placed axially inside with respect to said carcass ply turned up end portions (2a), said at least two reinforcing layers (6, 7) comprising:
- an outer reinforcing layer (6) provided with reinforcing elements parallel to one another and inclined with respect to the radial direction of said tire;
- an inner reinforcing layer (7), placed axially inside with respect to said outer reinforcing layer, provided with reinforcing elements parallel to one another and inclined with respect to the radial direction of said tire in a direction opposite to those of said outer reinforcing layer;
wherein the lowest radially inner end of one of said outer reinforcing layer (6) and said inner reinforcing layer (7), is placed at a tire height (h1) which is lower than or equal to 35% with respect to a tire height (h2) in correspondence to the maximum tire section width (W),
wherein the highest radially outer end of one of said outer reinforcing layer (6) and said inner reinforcing layer (7), is placed at a tire height (h3) which is lower than or equal to 60% with respect to a tire height (h2) in correspondence to the maximum tire section width (W),
wherein the reinforcing elements of said outer reinforcing layer (6) and said inner reinforcing layer (7) are metal cords, **characterized in that** the radially outer end of said carcass ply turned up end portions (2a) is comprised between the highest radially inner end of one of said inner reinforcing layer (7) and outer reinforcing layer (6) and the lowest radially outer end of one of said inner reinforcing layer (7) and outer reinforcing layer (6).

2. Tire according to claim 1, wherein the lowest radially inner end of one of said outer reinforcing layer and said inner reinforcing layer, is placed at a tire height (h1) which is of from 10% to 30% with respect to a tire height (h2) in correspondence to the maximum tire section width (W).

3. Tire according to claim 2, wherein the lowest radially inner end of one of said outer reinforcing layer and said inner reinforcing layer, is placed at a tire height (h1) which is of from 15% to 25% with respect to a tire height (h2) in correspondence to the maximum tire section width (W).

4. Tire according to any one of the preceding claims, wherein the radial distance (d1) between the radially inner ends of said outer reinforcing layer and inner reinforcing layer, is higher than or equal to 4 mm.

5. Tire according to claim 4, wherein the radial distance (d1) between the radially inner ends of said outer reinforcing layer and inner reinforcing layer, is of from 5 mm to 8 mm.

6. Tire according to any one of the preceding claims, wherein the radially inner end of said outer reinforcing layer is staggered radially outward with respect to the radially inner end of said inner reinforcing layer.

7. Tire according to any one of the preceding claims, wherein the radial distance (d2) between the radially outer end of said carcass ply turned up end portions and the highest radially inner end of one of said outer reinforcing layer and said inner reinforcing layer, is higher than or equal to 8 mm.

8. Tire according to claim 7, wherein the radial distance (d2) between the radially outer end of said carcass ply turned up end portions and the highest radially inner end of one of said outer reinforcing layer and said inner reinforcing layer, is of from 10 mm to 15 mm.

9. Tire according to any one of the preceding claims, wherein, when the radially outer end of said at least one chafer is placed at a higher height with respect to the radially outer end of said carcass ply turned up end portions, the radial distance (d3) between the lowest radially outer end of one of said outer reinforcing layer and said inner reinforcing layer and the radially outer end of said at least one chafer, is higher than or equal to 4 mm.

10. Tire according to claim 9, wherein the radial distance (d3) between the lowest radially outer end of one of said outer reinforcing layer and said inner reinforcing layer and the radially outer end of said at least one chafer, is of from 5 mm to 8 mm.

11. Tire according to any one of claims 1 to 8, wherein, when the radially outer end of said at least one chafer is placed at a lower height with respect to the radially outer end of said carcass ply turned up end portions, the radial distance (d6) between the lowest radially outer end of one of said outer reinforcing layer and said inner reinforcing layer and the radially outer end of said carcass ply turned up end portions, is higher than or equal to 4 mm.

12. Tire according to claim 11, wherein the radial distance (d6) between the lowest radially outer end of one of said outer reinforcing layer and said inner reinforcing layer and the radially outer end of said carcass ply turned up end portions, is of from 5 mm to 8 mm.

13. Tire according to any one of the preceding claims, wherein the radial distance (d4) between the radially outer ends of said outer reinforcing layer and inner reinforcing layer, is higher than or equal to 4 mm.

14. Tire according to claim 13, wherein the radial distance (d4) between the radially outer ends of said outer reinforcing layer and inner reinforcing layer, is of from 5 mm to 8 mm.

15. Tire according to any one of the preceding claims, wherein the radially outer end of said inner reinforcing layer is staggered radially outward with respect to the radially outer end of said outer reinforcing layer.

16. Tire according to any one of the preceding claims, wherein the radial distance (d5) between the highest radially outer end of one of said outer reinforcing layer and said inner reinforcing layer and the radially outer end of said at least one chafer, is lower than or equal to 35% with respect to a tire height (h2) in correspondence to the maximum tire section width (W).

17. Tire according to claim 16, wherein the radial distance (d5) between the highest radially outer end of one of said outer reinforcing layer and said inner reinforcing layer and the radially outer end of said at least one chafer, is of from 15% to 30% with respect to a tire height (h2) in correspondence to the maximum tire section width (W).

18. Tire according to claim 1, wherein the highest radially outer end of one of said outer reinforcing layer and said inner reinforcing layer, is placed at a tire height (h3) which is of from 35% to 45% with respect to a tire height (h2) in correspondence to the maximum tire section width (W).

19. Tire according to any one of the previous claims, wherein said metal cords comprise at least one elementary metal wire having a diameter in the range of from 0.05 mm to 0.25 mm, preferably of from 0.10 mm to 0.20 mm.

20. Tire according to any one of the previous claims, wherein said metal cords comprise at least one preformed elementary metal wire.

## Patentansprüche

1. Reifen (1) für Lastkraftwagen mit:
- einem Paar Wulststrukturen (3), wobei die Wulststrukturen wenigstens einen Wulstkern (4) und wenigstens ein Wulstfüllmaterial (5) aufweisen;
- einer Karkassenstruktur, die eine im Wesentlichen ringförmige Form aufweist, mit wenigstens einer Karkassenlage (2), die sich zwischen den Wulstkernen (4) erstreckt, wobei die Endabschnitte der Karkassenlage um die Wulstkerne von der axial inneren zu der axial äußeren Seite des Reifens herumgebogen sind, wobei die wenigstens eine Karkassenlage Verstärkungselemente aufnimmt, die in einer im Wesentlichen zu einer Umfangsrichtung senkrechten Richtung angeordnet sind, wobei die Verstärkungselemente aus verdrillten Stahldrähten, die mit einer Metalllegierung beschichtet sind, hergestellt sind;
- einer Gürtelstruktur (10), die an einer zu der Karkassenstruktur radial äußeren Position aufgebracht ist;
- einem Laufflächenband (11), das radial der Gürtelstruktur überlagert ist;
- einem Paar Seitenwände (13), wobei jede Seitenwand seitlich an in Bezug auf die Karkassenstruktur gegenüberliegenden Seiten aufgebracht ist;
- wenigstens einem Wulstband (8), das axial in Bezug auf die herumgebogenen Endabschnitte (2a) der Karkassenlage außen angeordnet ist;
- wenigstens zwei Verstärkungsschichten (6, 7), die axial in Bezug auf die herumgebogenen Endabschnitte (2a) der Karkassenlage innen angeordnet sind, wobei die wenigstens zwei Verstärkungsschichten (6, 7) aufweisen:
- eine äußere Verstärkungsschicht (6), die mit Verstärkungselementen versehen ist, die parallel zueinander sind und die zu der Radialrichtung des Reifens geneigt sind;
- eine innere Verstärkungsschicht (7), die axial in Bezug auf die äußere Verstärkungsschicht innen angeordnet ist, die mit Verstärkungselementen versehen ist, die parallel zueinander sind und die zu der Radialrichtung des Reifens in einer Richtung entgegengesetzt zu derjenigen der äußeren Verstärkungsschicht geneigt sind;
wobei das unterste radial innere Ende der äußeren Verstärkungsschicht (6) oder der inneren Verstärkungsschicht (7) an einer Reifenhöhe (h1) angeordnet ist, die kleiner oder gleich 35% einer Reifenhöhe (h2) entsprechend der maximalen Reifenquerschnittsbreite (W) ist,
wobei das oberste radial äußere Ende der äußeren Verstärkungsschicht (6) oder der inneren Verstärkungsschicht (7) an einer Reifenhöhe (h3) angeordnet ist, die kleiner oder gleich 60% einer Reifenhöhe (h2) entsprechend der maximalen Reifenquerschnittsbreite (W) ist,
wobei die Verstärkungselemente der äußeren Verstärkungsschicht (6) und der inneren Verstärkungsschicht (7) Metallkorde sind, **dadurch gekennzeichnet, dass**
das radial äußere Ende der herumgebogenen Endabschnitte (2a) der Karkassenlage zwischen dem obersten radial inneren Ende der inneren Verstärkungsschicht (7) oder der äußeren Verstärkungsschicht (6) und dem untersten radial äußeren Ende der inneren Verstärkungsschicht (7) oder der äußeren Verstärkungsschicht (6) liegt.

2. Reifen nach Anspruch 1, bei dem das unterste radial innere Ende der äußeren Verstärkungsschicht oder der inneren Verstärkungsschicht an einer Reifenhöhe (h1) angeordnet ist, die zwischen 10% und 30% einer Reifenhöhe (h2) entsprechend der maximalen Reifenquerschnittsbreite (W) liegt.

3. Reifen nach Anspruch 2, bei dem das unterste radial innere Ende der äußeren Verstärkungsschicht oder der inneren Verstärkungsschicht an einer Reifenhöhe (h1) angeordnet ist, die zwischen 15% und 25% einer Reifenhöhe (h2) entsprechend der maximalen Reifenquerschnittsbreite (W) liegt.

4. Reifen nach einem der vorherigen Ansprüche, bei dem der radiale Abstand (d1) zwischen den radial inneren Enden der äußeren Verstärkungsschicht und der inneren Verstärkungsschicht größer oder gleich 4 mm ist.

5. Reifen nach Anspruch 4, bei dem der radiale Abstand (d1) zwischen den radial inneren Enden der äußeren Verstärkungsschicht und der inneren Verstärkungsschicht zwischen 5 mm und 8 mm liegt.

6. Reifen nach einem der vorherigen Ansprüche, bei dem das radial innere Ende der äußeren Verstärkungsschicht radial nach außen in Bezug auf das radial innere Ende der inneren Verstärkungsschicht versetzt ist.

7. Reifen nach einem der vorherigen Ansprüche, bei dem der radiale Abstand (d2) zwischen dem radial äußeren Ende der herumgebogenen Endabschnitte der Karkassenlage und dem obersten radial inneren Ende der äußeren Verstärkungsschicht oder der inneren Verstärkungsschicht größer oder gleich 8 mm ist.

8. Reifen nach Anspruch 7, bei dem der radiale Abstand (d2) zwischen dem radial äußeren Ende der herumgebogenen Endabschnitte der Karkassenlage und dem obersten radial inneren Ende der äußeren Verstärkungsschicht oder der inneren Verstärkungsschicht zwischen 10 mm und 15 mm liegt.

9. Reifen nach einem der vorherigen Ansprüche, bei dem, wenn das radial äußere Ende des wenigstens einen Wulstbands an einer größeren Höhe als das radial äußere Ende der herumgebogenen Endabschnitte der Karkassenlage angeordnet ist, der radiale Abstand (d3) zwischen dem untersten radial äußeren Ende der äußeren Verstärkungsschicht und der inneren Verstärkungsschicht oder dem radial äußeren Ende des wenigstens einen Wulstbands größer oder gleich 4 mm ist.

10. Reifen nach Anspruch 9, bei dem der radiale Abstand (d3) zwischen dem untersten radial äußeren Ende der äußeren Verstärkungsschicht oder der inneren Verstärkungsschicht und dem radial äußeren Ende des wenigstens einen Wulstbands zwischen 5 mm und 8 mm liegt.

11. Reifen nach einem der Ansprüche 1 bis 8, bei dem, wenn das radial äußere Ende des wenigstens einen Wulstbands an einer geringeren Höhe als das radial äußere Ende der herumgebogenen Endabschnitte der Karkassenlage angeordnet ist, der radiale Abstand (d6) zwischen dem untersten radial äußeren Ende der äußeren Verstärkungsschicht oder der inneren Verstärkungsschicht und dem radial äußeren Ende der herumgebogenen Endabschnitte der Karkassenlage größer oder gleich 4 mm ist.

12. Reifen nach Anspruch 11, bei dem der radiale Abstand (d6) zwischen dem untersten radial äußeren Ende der äußeren Verstärkungsschicht oder der inneren Verstärkungsschicht und dem radial äußeren Ende der herumgebogenen Endabschnitte der Karkassenlage zwischen 5 mm und 8 mm liegt.

13. Reifen nach einem der vorherigen Ansprüche, bei dem der radiale Abstand (d4) zwischen den radial äußeren Enden der äußeren Verstärkungsschicht und der inneren Verstärkungsschicht größer oder gleich 4 mm ist.

14. Reifen nach Anspruch 13, bei dem der radiale Abstand (d₄) zwischen den radial äußeren Enden der äußeren Verstärkungsschicht oder der inneren Verstärkungsschicht zwischen 5 mm und 8 mm liegt.

15. Reifen nach einem der vorherigen Ansprüche, bei dem das radiale äußere Ende der inneren Verstärkungsschicht radial in Bezug auf das radial äußere Ende der äußeren Verstärkungsschicht versetzt ist.

16. Reifen nach einem der vorherigen Ansprüche, bei dem der radiale Abstand (d5) zwischen dem obersten radial äußeren Ende der äußeren Verstärkungsschicht oder der inneren Verstärkungsschicht und dem radial äußeren Ende des wenigstens einen Wulstbands kleiner oder gleich 35% einer Reifenhöhe (h2) entsprechend der maximalen Reifenquerschnittsbreite (W) ist.

17. Reifen nach Anspruch 16, bei dem der radiale Abstand (d5) zwischen dem obersten radial äußeren Ende der äußeren Verstärkungsschicht oder der inneren Verstärkungsschicht und dem radial äußeren Ende des wenigstens einen Wulstbands zwischen 15% und 30% einer Reifenhöhe (h2) entsprechend der maximalen Reifenquerschnittsbreite (W) liegt.

18. Reifen nach Anspruch 1, bei dem das oberste radial äußere Ende der äußeren Verstärkungsschicht oder der inneren Verstärkungsschicht an einer Reifenhöhe (h3) angeordnet ist, die zwischen 35% und 45% einer Reifenhöhe (h2) entsprechend der maximalen Reifenquerschnittsbreite (W) liegt.

19. Reifen nach einem der vorherigen Ansprüche, bei dem die Metallkorde wenigstens einen elementaren Metalldraht aufweisen, der einen Durchmesser zwischen 0,05 mm und 0,25 mm, vorzugsweise zwischen 0,10 mm und 0,20 mm aufweist.

20. Reifen nach einem der vorherigen Ansprüche, bei dem die Metallkorde wenigstens einen vorgeformten elementaren Metalldraht aufweisen.

## Revendications

1. Pneu (1) pour poids lourd comportant :
• une paire de structures de talon (3), lesdites structures de talon comportant au moins une tringle (4) et au moins un bourrage de talon (5) ;
• une structure de carcasse ayant une forme sensiblement toroïdale comportant au moins une nappe de carcasse (2) s'étendant entre les tringles (4), les parties d'extrémité de la nappe de carcasse étant retournées autour des tringles depuis le côté axialement intérieur vers le côté axialement extérieur du pneu, l'au moins une nappe de carcasse incorporant des éléments de renfort disposés selon une direction sensiblement perpendiculaire par rapport à une direction circonférentielle, les éléments de renfort étant faits de fils métalliques toronnés ensemble, revêtus d'un alliage métallique ;
• une structure de ceinture (10) appliquée dans une position radialement extérieure par rapport à ladite structure de carcasse ;
• une bande de roulement (11) radialement superposée sur la structure de ceinture ;
• une paire de flancs (13), chaque flanc étant appliqué latéralement sur des côtés opposés par rapport à la structure de carcasse ;
• au moins une bande talon (8) placée axialement à l'extérieur par rapport aux parties d'extrémité retournées de la nappe de carcasse (2a);
• au moins deux couches de renfort (6, 7) placées axialement à l'intérieur par rapport aux parties d'extrémité retournées de la nappe de carcasse (2a), lesdites au moins deux couches de renfort (6, 7) comportant :
o une couche de renfort extérieure (6) pourvue d'éléments de renfort parallèles les uns aux autres et inclinés par rapport à la direction radiale dudit pneu ;
o une couche de renfort intérieure (7), placée axialement à l'intérieur par rapport à la couche de renfort extérieure, pourvue d'éléments de renfort parallèles les uns aux autres et inclinés par rapport à la direction radiale dudit pneu dans une direction opposée à ceux de la couche de renfort extérieure ;
dans lequel l'extrémité radialement intérieure la plus basse de la couche de renfort extérieure (6) et de la couche de renfort intérieure (7), est placée à une hauteur de pneu (h1) qui est inférieure ou égale à 35% par rapport à une hauteur de pneu (h2) au droit de la largeur maximale (W) de la section du pneu,
dans lequel l'extrémité radialement intérieure la plus haute de l'une parmi la couche de renfort extérieure (6) et la couche de renfort intérieure (7), est placée à une hauteur de pneu (h3) qui est inférieure ou égale à 60% par rapport à une hauteur de pneu (h2) au droit de la largeur maximale (W) de la section du pneu,
dans lequel les éléments de renfort de la couche de renfort extérieure (6) et de la couche de renfort intérieure (7) sont des câbles métalliques, **caractérisé en ce que** l'extrémité radialement extérieure des parties d'extrémité retournées de la nappe de carcasse (2a) est comprise entre l'extrémité radialement intérieure la plus haute de l'une des couche de renfort intérieure (7) et couche de renfort extérieure (6), et l'extrémité radialement intérieure la plus basse de l'une des couche de renfort intérieure (7) et couche de renfort extérieure (6).

2. Pneu selon la revendication 1, dans lequel l'extrémité radialement intérieure la plus basse de l'une parmi la couche de renfort extérieure et la couche de renfort intérieure, est placée à une hauteur de pneu (h1) qui est de 10% à 30% par rapport à une hauteur de pneu (h2) au droit de la largeur maximale (W) de la section du pneu.

3. Pneu selon la revendication 2, dans lequel l'extrémité radialement intérieure la plus basse de l'une parmi la couche de renfort extérieure et la couche de renfort intérieure, est placée à une hauteur de pneu (h1), qui est de 15% à 25% par rapport à une hauteur de pneu (h2) au droit de la largeur maximale (W) de la section du pneu.

4. Pneu selon l'une quelconque des revendications précédentes, dans lequel la distance radiale (d1) entre les extrémités radialement intérieures de la couche de renfort extérieure et de la couche de renfort intérieure, est supérieure ou égale à 4 mm.

5. Pneu selon la revendication 4, dans lequel la distance radiale (d1) entre les extrémités radialement intérieures de la couche de renfort extérieure et de la couche de renfort intérieure, est de 5 mm à 8 mm.

6. Pneu selon l'une quelconque des revendications précédentes, dans lequel l'extrémité radialement intérieure de la couche de renfort extérieure est décalée radialement vers l'extérieur par rapport à l'extrémité radialement intérieure de la couche de renfort intérieure.

7. Pneu selon l'une quelconque des revendications précédentes, dans lequel la distance radiale (d2) entre l'extrémité radialement extérieure des parties d'extrémité retournées de la nappe de carcasse et l'extrémité radialement intérieure la plus haute de l'une parmi la couche de renfort extérieure et la couche de renfort intérieure, est supérieure ou égale à 8 mm.

8. Pneu selon la revendication 7, dans lequel la distance radiale (d2) entre l'extrémité radialement extérieure des parties d'extrémité retournées de la nappe de carcasse, et l'extrémité radialement intérieure la plus haute de l'une parmi la couche de renfort extérieure et la couche de renfort intérieure, est de 10 mm à 15 mm.

9. Pneu selon l'une quelconque des revendications précédentes, dans lequel, lorsque l'extrémité radialement extérieure de l'au moins une bande talon est placée à une hauteur supérieure par rapport à l'extrémité radialement extérieure des parties d'extrémité retournées de la nappe de carcasse, la distance radiale (d3) entre l'extrémité radialement extérieure la plus basse de l'une parmi la couche de renfort extérieure et la couche de renfort intérieure, et l'extrémité radialement extérieure de l'au moins une bande talon, est supérieure ou égale à 4 mm.

10. Pneu selon la revendication 9, dans lequel la distance radiale (d3) entre l'extrémité radialement extérieure la plus basse de l'une parmi la couche de renfort extérieure, et la couche de renfort intérieure, et l'extrémité radialement extérieure de l'au moins une bande talon, est de 5 à 8 mm.

11. Pneu selon l'une quelconque des revendications 1 à 8, dans lequel, lorsque l'extrémité radialement extérieure de l'au moins une bande talon est placée à une hauteur inférieure par rapport à l'extrémité radialement extérieure des parties d'extrémité retournées de la nappe de carcasse, la distance radiale (d6) entre l'extrémité radialement extérieure la plus basse de l'une parmi la couche de renfort extérieure, et la couche de renfort intérieure, et l'extrémité radialement extérieure des parties d'extrémité retournées de la nappe de carcasse, est supérieure ou égale à 4 mm.

12. Pneu selon la revendication 11, dans laquelle la distance radiale (d6) entre l'extrémité radialement extérieure la plus basse de l'une parmi la couche de renfort extérieure et la couche de renfort intérieure, et l'extrémité radialement extérieure des parties d'extrémité retournées de la nappe de carcasse, est de 5 mm à 8 mm.

13. Pneu selon l'une quelconque des revendications précédentes, dans lequel la distance radiale (d4) entre les extrémités radialement extérieures de la couche de renfort extérieure et de la couche de renfort intérieure, est supérieure ou égale à 4 mm.

14. Pneu selon la revendication 13, dans lequel la distance radiale (d4) entre les extrémités radialement extérieures de la couche de renfort extérieure et de la couche de renfort intérieure, est de 5 mm à 8 mm.

15. Pneu selon l'une quelconque des revendications précédentes, dans lequel l'extrémité radialement extérieure de la couche de renfort intérieure est décalée radialement vers l'extérieur par rapport à l'extrémité radialement extérieure de la couche de renfort extérieure.

16. Pneu selon l'une quelconque des revendications précédentes, dans lequel la distance radiale (d5) entre l'extrémité radialement extérieure la plus haute de l'une parmi la couche de renfort extérieure, et la couche de renfort intérieure et l'extrémité radialement extérieure de l'au moins une bande talon, est inférieure ou égale à 35% par rapport à une hauteur de pneu (h2) au droit de la largeur maximale (W) de la section du pneu.

17. Pneu selon la revendication 16, dans lequel la distance radiale (d5) entre l'extrémité radialement extérieure la plus haute de l'une parmi la couche de renfort extérieure et la couche de renfort intérieure, et l'extrémité radialement extérieure de l'au moins une bande talon, est de 15% à 30 % par rapport à une hauteur de pneu (h2) au droit de la largeur maximale (W) de la section du pneu.

18. Pneu selon la revendication 1, dans lequel l'extrémité radialement extérieure la plus haute de l'une parmi la couche de renfort extérieure et la couche de renfort intérieure, est placée à une hauteur de pneu (h3) qui est de 35% à 45% par rapport à une hauteur de pneu (h2) au droit de la largeur maximale (W) de la section du pneu.

19. Pneu selon l'une quelconque des revendications précédentes, dans lequel les câbles métalliques comportent au moins un fil métallique élémentaire ayant un diamètre compris entre 0,05 mm à 0,25 mm, de préférence de 0,10 mm à 0,20 mm.

20. Pneu selon l'une quelconque des revendications précédentes, dans lequel les câbles métalliques comportent au moins un fil métallique élémentaire préformé.
